# EUROPEAN PATENT SPECIFICATION

(11) **EP 4 391 190 B1**
(45) Date of publication and mention of the grant of the patent: **29.04.2026**
(21) Application number: 23767150.8
(22) Date of filing: 07.03.2023
(51) Int. Cl.: H01M 50/367, H01M 50/271, H01M 50/308, H01M 50/35

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 07.03.2022 KR 20220028947
(43) Date of publication of application: 26.06.2024
(73) Proprietor: LG Energy Solution, Ltd., Seoul 07335 (KR)
(72) Inventor: LEE, Tae-Kyeong, Daejeon 34122 (KR); SHIN, Ju-Hwan, Daejeon 34122 (KR); PARK, Myung-Ki, Daejeon 34122 (KR); PARK, Won-Kyoung, Daejeon 34122 (KR); SEONG, Jun-Yeob, Daejeon 34122 (KR); WOO, Sung-Hoon, Daejeon 34122 (KR); LEE, Hyoung-Suk, Daejeon 34122 (KR)
(74) Representative: Plasseraud IP
(86) International application number: PCT/KR2023/003132
(87) International publication number: WO 2023/172049

(56) References cited:
- CN-A- 110 739 424
- CN-A- 112 331 992
- CN-U- 203 932 144
- JP-A- 2009 054 303
- KR-A- 20110 042 119
- KR-A- 20160 132 143
- KR-A- 20210 129 513
- KR-A- 20210 134 165

## Description

### TECHNICAL FIELD

The present disclosure relates to a battery pack and a vehicle including the same, and more specifically, to a battery pack configured to discharge a high-temperature gas to the outside of the battery pack without affecting other adjacent battery modules when the gas is generated inside the battery module, and a vehicle including the same.

### BACKGROUND ART

As the demand for portable electronic products such as notebooks, video cameras, and mobile phones rapidly increases and the commercialization of robots and electric vehicles begins in earnest, research on high-performance secondary batteries capable of repeated charging and discharging is being actively conducted.

Currently commercialized secondary batteries include nickel cadmium batteries, nickel hydrogen batteries, nickel zinc batteries, and lithium secondary batteries. Among them, lithium secondary batteries are in the limelight because of their advantages of free charge and discharge, very low self-discharge rate, and high energy density, as the memory effect hardly occurs compared to nickel-based secondary batteries.

These lithium secondary batteries mainly use lithium-based oxide and carbon material as a positive electrode active material and a negative electrode active material, respectively. A lithium secondary battery includes an electrode assembly in which a positive electrode plate and a negative electrode plate coated with such a positive electrode active material and a negative electrode active material, respectively, are disposed with a separator therebetween, and an exterior material, that is, a battery case for sealing and accommodating the electrode assembly together with electrolyte.

In general, lithium secondary batteries may be classified into a can-type secondary battery in which an electrode assembly is embedded in a metal can and a pouch-type secondary battery in which an electrode assembly is embedded in a pouch of an aluminum laminate sheet, depending on the shape of the exterior material.

Recently, secondary batteries have been widely used for driving or energy storage not only in small devices such as portable electronic devices, but also in medium and large-sized devices such as electric vehicles and energy storage systems (ESSs). Many of these secondary batteries may be accommodated together inside a module case in a state of being electrically connected, which may configure one battery module, and such battery modules may be electrically connected again in a narrow space to increase energy density, which configures a battery pack.

However, when a plurality of battery modules exist in a dense state in a narrow space as above, they may be vulnerable to accidents such as fire or explosion. For example, when an event such as thermal runaway occurs in one battery module, high-temperature gas may be discharged from the battery module. If this gas is not properly discharged to the outside of the battery pack, the thermal event generated in some battery modules may be propagated to other battery modules provided inside the battery pack, which may cause a chain reaction. Also, in this case, the pressure inside the battery pack increases, and there is a possibility of explosion. When the battery pack explodes, not only great damage may be caused to nearby devices or users due to the pressure of the explosion, but also the range and speed of damage may be further increased. Therefore, it is required to develop a battery pack having a structure that allows the high-temperature gas to be safely discharged to the outside of the battery pack without affecting other adjacent battery modules when an abnormality occurs in some battery modules and a gas is discharged.

Documents CN 110 739 424 A, CN 203 932 144 U and CN 112 331 992 A disclose battery packs comprising several battery modules in a housing that comprises venting channels. CN 110 739 424 A discloses a battery pack featuring a pack cover with integrated guides. However, the pack housing does not comprise a central space formed between the first and second accommodation spaces, which would allow gas to be directed to this central space by the guide structure of the pack cover.

### DISCLOSURE

### Technical Problem

The present disclosure is designed to solve the problems of the related art, and therefore the present disclosure is directed to controlling the flow of a gas in a desired direction by adding an additional venting channel formation structure to an existing battery pack.

In another aspect of the present disclosure, the present disclosure is directed to preventing a phenomenon in which gas smoothly moves to a center venting channel through a side venting channel and flows back toward the side venting channel.

In still another aspect, the present disclosure is directed to allowing the high-temperature gas ejected when a thermal event occurs in some battery modules to be safely discharged to the outside of the battery pack without affecting other battery modules inside the battery pack.

### Technical Solution

**In** one aspect of the present disclosure, there is provided a battery pack comprising: a pack housing having a first accommodation space, a second accommodation space spaced apart from the first accommodation space, and a center space formed between the first accommodation space and the second accommodation space; at least one first battery module disposed within the first accommodation space; at least one second battery module disposed within the second accommodation space; and a pack cover configured to include a first side venting channel having a first volume and configured to guide the gas generated in the first battery module to the center space at a position corresponding to the first battery module, a second side venting channel having a second volume and configured to guide the gas generated in the second battery module to the center space at a position corresponding to the second battery module, and a center venting channel having a third volume equal to or greater than the first volume and the second volume and configured to guide the gas collected in the center space to the outside of the pack housing at a position corresponding to the center space.

A region of the pack cover corresponding to the center venting channel may be formed at a higher position than a region corresponding to the first side venting channel and the second side venting channel.

The battery pack may include a barrier disposed at a corresponding position between the first battery modules adjacent to each other and a corresponding position between the second battery modules adjacent to each other, respectively.

The barrier may be configured to block the movement of gas between the accommodation spaces of the first battery modules adjacent to each other and the movement of gas between the accommodation spaces of the second battery modules adjacent to each other.

The battery pack may include a sealing member on at least one position between the barrier and the pack cover and between the barrier and the pack housing.

The pack cover may include a cover plate configured to cover the accommodation space of the pack housing; and a channel plate coupled to an inner surface of the cover plate and having the first side venting channel, the second side venting channel, and the center venting channel.

The channel plate may include a first channel plate coupled to the inner surface of the cover plate at a position corresponding to the first battery module and having the first side venting channel; a second channel plate coupled to the inner surface of the cover plate at a position corresponding to the second battery module and having the second side venting channel; and a third channel plate coupled to the inner surface of the cover plate at a position corresponding to the center space and having the center venting channel.

The pack housing may include a gas collection space formed in at least one of one side and the other side along an extension direction of the center venting channel.

The pack housing may include a venting device configured to allow gas in the gas collection space to be discharged to the outside of the pack housing.

The first side venting channel and the second side venting channel may have a groove form formed on an inner surface of the pack cover.

The first side venting channel and the second side venting channel may have a groove form formed on one surface of the first channel plate and the second channel plate, respectively, and a surface of the first channel plate and the second channel plate opposite to a surface on which the groove is formed may be coupled to the inner surface of the cover plate.

The first side venting channel and the second side venting channel may be provided in plurality along a longitudinal direction of the battery pack, respectively.

The center venting channel may include a first center venting channel communicating with the first side venting channel and configured to have a fourth volume larger than the first volume; and a second center venting channel communicating with the second side venting channel and configured to have a fifth volume greater than the second volume.

The third channel plate may include a first channel forming portion forming a first center venting channel communicating with the first side venting channel; a second channel forming portion forming a second center venting channel communicating with the second side venting channel; and a coupling portion that connects the first channel forming portion and the second channel forming portion and is coupled to the inner surface of the cover plate.

A vehicle according to an embodiment of the present disclosure for achieving the above object includes the battery pack according to the present disclosure.

### Advantageous Effects

According to one aspect of the present disclosure, a function of controlling a gas flow may be added by creating a venting channel in a pack cover that is used only to cover a general pack housing. When a thermal event occurs, the temperature of the gas and flame generated in each battery module may drop during movement, and the intensity of the flame may be weakened, and it is possible to eliminate or reduce the damage that can be caused by high-temperature gas and flame being ejected to the outside.

In particular, due to the structure of the pack cover having a side venting channel with a smaller volume than the center venting channel, gas can move smoothly from the side venting channel to the center venting channel, and it is possible to prevent the phenomenon in which the gas entering the center venting channel flows back to the side venting channel. Therefore, it is possible to smoothly discharge the gas.

According to another aspect of the present disclosure, it is easy to make the volume of the center venting channel larger than the volume of the side venting channel. When a battery pack including a pack cover with a protruding center area is mounted on a vehicle, the protruding part of the pack cover is located between the driver's seat and the front passenger's seat and/or in the middle of the rear seat of the vehicle, so that the battery pack can be easily mounted.

According to another aspect of the present disclosure, it is possible to delay/prevent the high-temperature venting gas generated from some problematic battery modules from affecting neighboring battery modules during a thermal event.

According to another aspect of the present disclosure, the release of gas can be done quickly.

According to another aspect of the present disclosure, fire can be prevented or the rate of fire spread can be delayed.

According to another aspect of the present disclosure, in a secondary battery where energy density is important, it is possible to protect the secondary battery from external physical impact while arranging the secondary battery without providing a separate space for electrical components required for a battery module.

In addition, the present disclosure may have various other effects, which will be described in each embodiment, or descriptions of effects that can be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view showing a battery pack according to the present disclosure.
FIG. 2 is a perspective view showing the appearance of a battery pack according to the present disclosure.
FIG. 3 is a diagram showing the inner space of a pack housing included in the battery pack according to the present disclosure.
FIGS. 4 and 5 are diagrams showing a battery module included in the battery pack according to the present disclosure.
FIG. 6 is a diagram showing a pack cover included in the battery pack according to the present disclosure.
FIG. 7 is a cross-sectional view taken along line B-B' in FIG. 6.
FIG. 8 is a cross-sectional view taken along line C-C' in FIG. 6.
FIG. 9 is a diagram showing a pack cover included in the battery pack according to the present disclosure.
FIG. 10 is a diagram showing a barrier included in the battery pack according to the present disclosure.
FIG. 11 is a cross-sectional view taken along line A-A' in FIG. 2.
FIG. 12 is a diagram showing a collection space and a venting hole included in the battery pack according to the present disclosure.
FIG. 13 is a diagram showing a cover plate and a channel plate included in the battery pack according to the present disclosure.
FIG. 14 is a diagram showing a groove provided in a pack cover included in the battery pack according to the present disclosure.
FIG. 15 is a cross-sectional view showing the battery pack according to the present disclosure to which the pack cover of FIG. 13 is applied, taken along line D-D'.
FIG. 16 is a diagram showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawing. Like reference signs designate like components. Also, in the drawings, the thickness, ratio, and dimensions of components may be exaggerated for effective description of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but these terms are only for convenience of explanation, and it is apparent to those skilled in the art that the terms may vary depending on the location of the target object or the location of the observer.

Therefore, the description proposed herein is just a preferable example for the purpose of illustrations only, not intended to limit the disclosure, so it should be understood that other equivalents and modifications could be made thereto without departing from the scope of the disclosure.

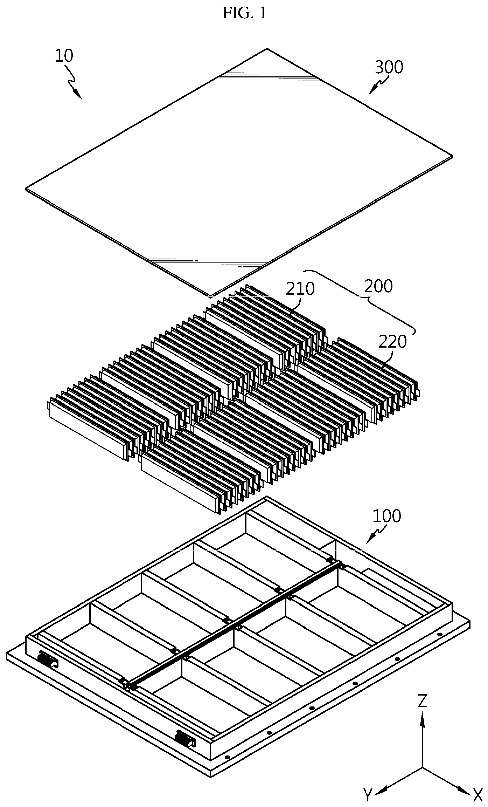

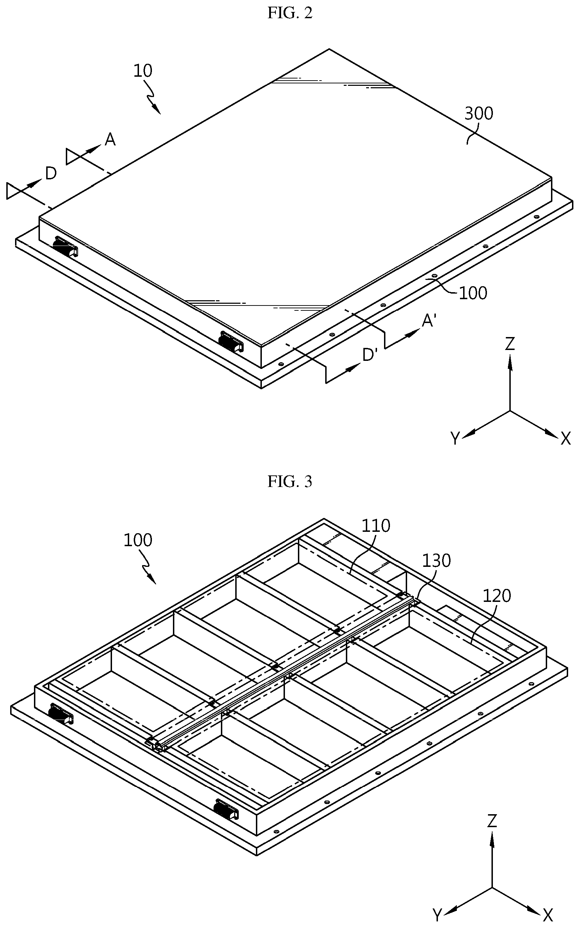

FIG. 1 is an exploded perspective view showing a battery pack according to the present disclosure. FIG. 2 is a perspective view showing the appearance of a battery pack according to the present disclosure. FIG. 3 is a diagram showing the inner space of a pack housing included in the battery pack according to the present disclosure.

Referring to FIGS. 1 to 3, the battery pack 10 according to the present disclosure includes a pack housing 100, a first battery module 210, a second battery module 220, and a pack cover 300.

The pack housing 100 may include a first accommodation space 110, a second accommodation space 120 spaced apart from the first accommodation space 110, and a center space 130 formed between the first accommodation space 110 and the second accommodation space 120. The first accommodation space 110 may be disposed opposite to the second accommodation space 120 with the center space 130 interposed therebetween. The pack housing 100 may include five plates without one side in the form of a rectangular parallelepiped. At this time, at least some of the individual plates constituting the pack housing 100 may be integrated with each other. Alternatively, the five plates may be separately manufactured and then coupled to each other through welding or bolting. The pack housing 100 may include, for example, a metal material such as aluminum. However, the present disclosure does not limit the pack housing 100 to a specific material.

At least one first battery module 210 may be disposed within the first accommodation space 110. At least one second battery module 220 may be disposed within the second accommodation space 120. For example, as shown in FIG. 1, four first battery modules 210 may be provided in the first accommodation space 110, and four second battery modules 220 may be provided in the second accommodation space 120.

The pack cover 300 may be configured to cover the battery module 200 by combining with the pack housing 100.

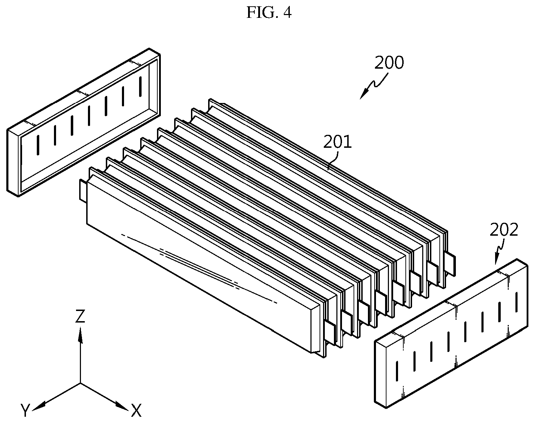

FIG. 4 is a diagram showing a battery module included in the battery pack according to the present disclosure.

Referring to FIG. 4, the battery module 200 may include a battery cell 201. The battery cell 201 may be provided in plurality. The battery cell 201 may mean a secondary battery. The battery cell 201 may include an electrode assembly, an electrolyte, a battery case accommodating the electrode assembly and the electrolyte, and a pair of electrode leads connected to the electrode assembly and drawn out of the battery case. The battery cell 201 may be, for example, a pouch-type secondary battery. However, other types of secondary batteries, such as a cylindrical battery or prismatic battery, may also be employed as the battery cell 201 of the present disclosure.

When the battery cell 201 is provided in plurality, the plurality of battery cells 201 may be electrically connected. The battery module 200 may further include a bus bar frame assembly 202 for electrically connecting the plurality of battery cells 201 to each other. The bus bar frame assembly 202 may be provided in a pair, for example. In this case, the pair of bus bar frame assemblies 202 may be coupled to one side and the other side of the longitudinal direction (direction parallel to the X-axis) of the battery cell 201, respectively.

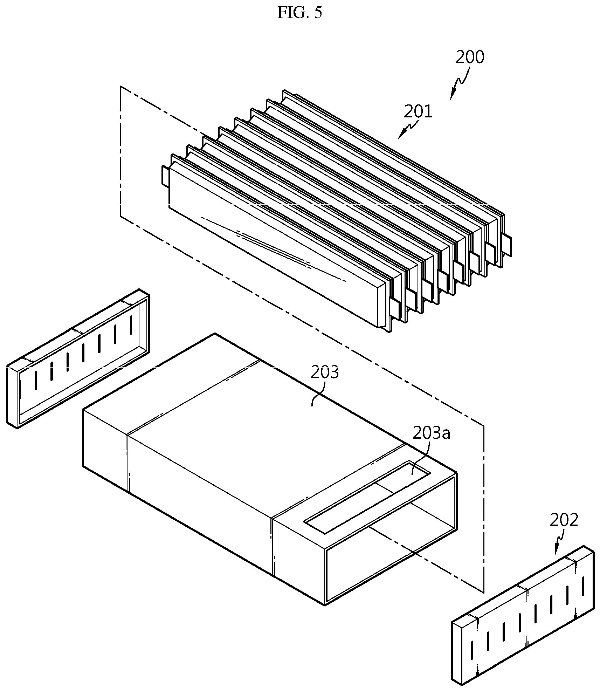

FIG. 5 is a diagram showing a battery module included in the battery pack according to the present disclosure.

The battery module 200 may further include a module case 203. The module case 203 may be configured to accommodate at least one battery cell 201. The module case 203 may include a venting hole 203a. When a gas is generated from the battery cell 201 accommodated in the inner space, the venting hole 203a may be configured to discharge the generated gas from the inside of the module case 203 to the outside.

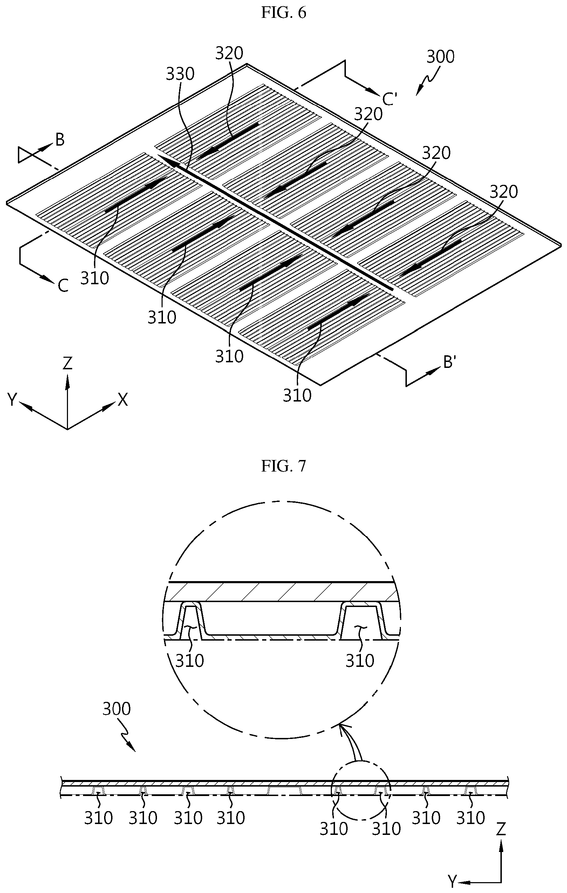

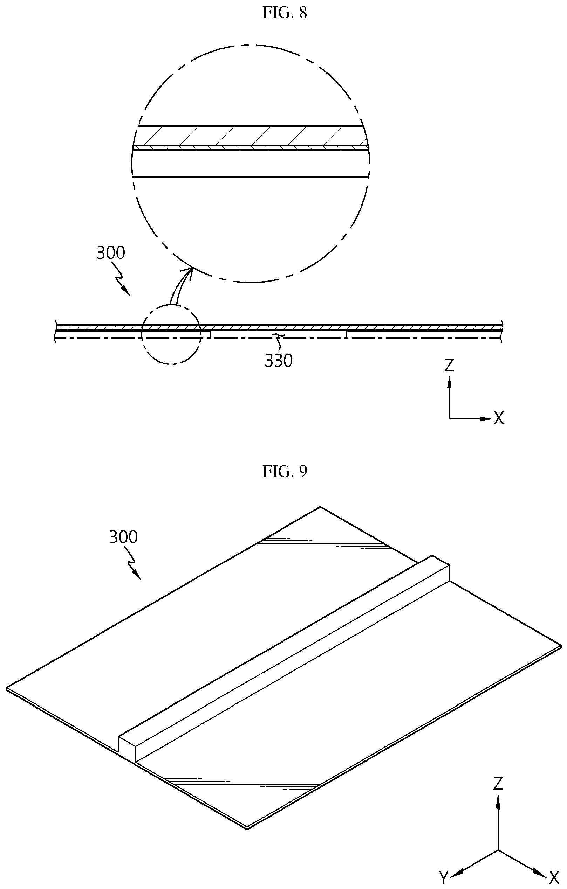

FIG. 6 is a diagram showing a pack cover included in the battery pack according to the present disclosure. FIG. 7 is a cross-sectional view taken along line B-B' in FIG. 6. FIG. 8 is a cross-sectional view taken along line C-C' in FIG. 6.

Referring to FIGS. 6 to 8, the pack cover 300 may include a first side venting channel 310, a second side venting channel 320, and a center venting channel 330.

The first side venting channel 310 may be configured to guide gas generated from the first battery module 210 to the center space 130 at a position corresponding to the first battery module 210. The first side venting channel 310 may have a substantially trapezoidal shape when viewed on the Y-Z plane. The first side venting channel 310 may be extended in the X-axis direction. The first side venting channel 310 may be a groove formed on one surface of the pack cover 300 (a surface parallel to the X-Y plane). The first side venting channel 310 may have a first volume. Referring to FIG. 1 together, the first volume may be the volume of a space between the inner side of the pack cover 300 and the first battery module 210 positioned to be in close contact with the pack cover 300. When a plurality of first battery modules 210 are provided, the volume of the first side venting channel 310 corresponding to one battery module may be the first volume. When a plurality of first side venting channels 310 are provided, the volume of an individual channel may be the first volume.

If the description of FIG. 7 and the first side venting channel 310 is applied to the second side venting channel 320, the second side venting channel 320 may be configured to guide the gas generated in the second battery module 220 to the center space 130 at a position corresponding to the second battery module 220. The second side venting channel 320 may have a substantially trapezoidal shape when viewed on the Y-Z plane. The second side venting channel 320 may be extended in the X-axis direction. The second side venting channel 320 may be a groove formed on one surface of the pack cover 300 (a surface parallel to the X-Y plane). The second side venting channel 320 may have a second volume. Referring to FIG. 1 together, the second volume may be the volume of a space between the inner side of the pack cover 300 and the second battery module 220 located in close contact with the pack cover 300. When a plurality of second battery modules 220 are provided, the volume of the second side venting channel 320 corresponding to one battery module may be the second volume. When a plurality of second side venting channels 320 are provided, the volume of an individual channel may be the second volume.

Referring to FIGS. 6 to 8 together with FIG. 3, the center venting channel 330 may be configured to guide the gas collected in the center space 130 to the outside of the pack housing 100 at a position corresponding to the center space 130. The center venting channel 330 may be extended in the Y-axis direction with a width corresponding to the center space 130 and a height corresponding to the first side venting channel 310 and the second side venting channel 320 on the X-Z plane. The center venting channel 330 may have a third volume equal to or greater than the first volume and the second volume.

According to this configuration of the present disclosure, a function of controlling gas flow can be added by creating a venting channel in the pack cover 300, which is used only for covering the general pack housing 100. When a thermal event occurs, gas and flame generated from each battery module move to the center venting channel 330 through the first side venting channel 310 and the second side venting channel 320, so the temperature of the gas may drop during movement, and the intensity of the flame may be weakened. It is possible to eliminate or reduce the damage that can be caused by high-temperature gas and flame being ejected to the outside.

In particular, when the center venting channel 330 has the same or greater volume than the side venting channels 310 and 320, gas can smoothly move from the side venting channels 310 and 320 to the center venting channel 330, and it is possible to prevent the gas entering the center venting channel 330 from flowing back to the side venting channel. Therefore, it is possible to smoothly discharge the gas.

FIG. 9 is a diagram showing a pack cover included in the battery pack according to the present disclosure.

Referring to FIG. 9, a region of the pack cover 300 corresponding to the center venting channel 330 may be formed at a higher position than a region corresponding to the first side venting channel 310 and the second side venting channel 320. The pack cover 300 may have a shape in which only a region corresponding to the center venting channel 330 protrudes in the positive direction of the Z axis. In the protruding shape, the inner surface of the pack cover 300 may be indented to form a certain space therein.

According to this configuration of the present disclosure, it is easy to make the volume of the center venting channel 330 larger than the volume of the side venting channel. In addition, when the battery pack 10 including the pack cover 300 is mounted on a vehicle, the protruding part of the pack cover 300 is located between the driver's seat and the front passenger's seat and/or in the middle of the rear seat of the vehicle, so it is easy to mount the battery pack 10.

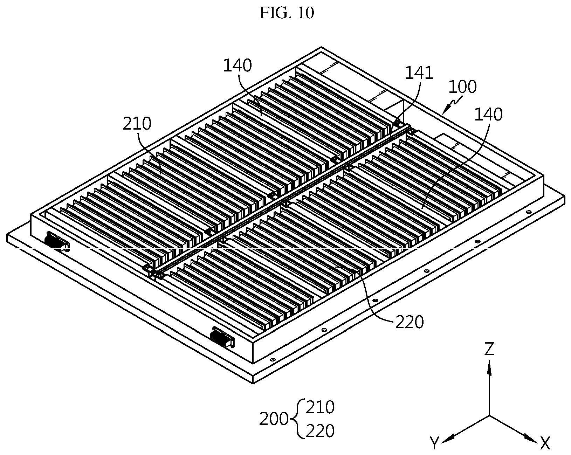

FIG. 10 is a diagram showing a barrier and an additional barrier included in the battery pack according to the present disclosure.

Referring to FIG. 10, the battery pack 10 according to the present disclosure may include a barrier 140 and an additional barrier 141. The barrier 140 may be disposed at a corresponding position between the first battery module 210 adjacent to each other and at a corresponding position between the second battery module 220 adjacent to each other, respectively. The barrier 140 may be configured to block the movement of gas between the accommodation spaces of the first battery modules 210 adjacent to each other and the movement of gas between the accommodation spaces of the second battery modules 220 adjacent to each other. The barrier 140 may be coupled with the pack cover 300 and/or the pack housing 100. The coupling may be performed by welding or bolting. The barrier 140 may have an approximate beam shape with an empty inside.

According to this configuration of the present disclosure, the accommodation spaces of the first battery module 210 adjacent to each other and the accommodation spaces of the second battery module 220 adjacent to each other are structurally isolated from each other by the barrier 140, so that the gas generated in each battery module does not move toward an adjacent battery module, but moves only in a direction toward the sensor space through the first side venting channel 310 and the second side venting channel 320. During this movement, the temperature of the gas may be lowered and the intensity of the flame may be weakened, thereby minimizing the effect of high-temperature flame and gas generated in each battery module on other battery modules. On the other hand, when the barrier 140 has an approximate beam shape with an empty inner space, the weight can be reduced while maintaining rigidity. The empty space formed in the barrier 140 can be used as a space for accommodating electrical components required for the battery module. Electrical equipment can be protected from physical impact by the barrier 140.

Referring again to FIG. 10 together with FIG. 3, the additional barrier 141 may have a long extension shape along the extension direction (parallel to the Y-axis) of the center venting channel 330 in order to define the accommodation space of the first battery module 210. Accordingly, the accommodation space for the first battery module 210 may be formed by the pack housing 100 and the additional barrier 141. Similarly, the additional barrier 141 for defining the accommodation space of the second battery module 220 may have a long extension shape along the extension direction (parallel to the Y-axis) of the center venting channel 330, that is, along the longitudinal direction of the battery pack 10. Accordingly, the accommodation space for the second battery module 220 may be formed by the pack housing 100 and the additional barrier 141. As such, when the additional barrier 141 for defining the accommodation space of the first battery module 210 and the additional barrier 141 for defining the accommodation space of the second battery module 220 are separately provided, the additional barrier 141 for defining the accommodation space of the first battery module 210 and the additional barrier 141 for defining the accommodation space of the second battery module 220 may be spaced apart from each other to form a center space 130 therebetween. Meanwhile, the additional barrier 141 may be configured to function as a common barrier 140 for defining the accommodation space of the first battery module 210 and the accommodation space of the second battery module 220 within the pack housing 100. The additional barrier 141 may have a long extension shape along the extension direction of the center venting channel 330. This additional barrier 141 may be located approximately at the center of the pack housing 100 in the width direction (direction parallel to the X-axis).

The additional barrier 141 may have an empty space therein, thereby reducing weight while maintaining rigidity. The empty space formed in the additional barrier 141 may be used as a passage through which wires connecting the battery modules 200 pass. In addition, the wires can be protected from physical impact by the additional barrier 141. Therefore, a secondary battery in which energy density is important can have a high energy density.

The barrier 140 and the additional barrier 141 may be configured to be at least partially integrated with each other. Alternatively, these members may be manufactured separately and then coupled to each other through welding or bolting.

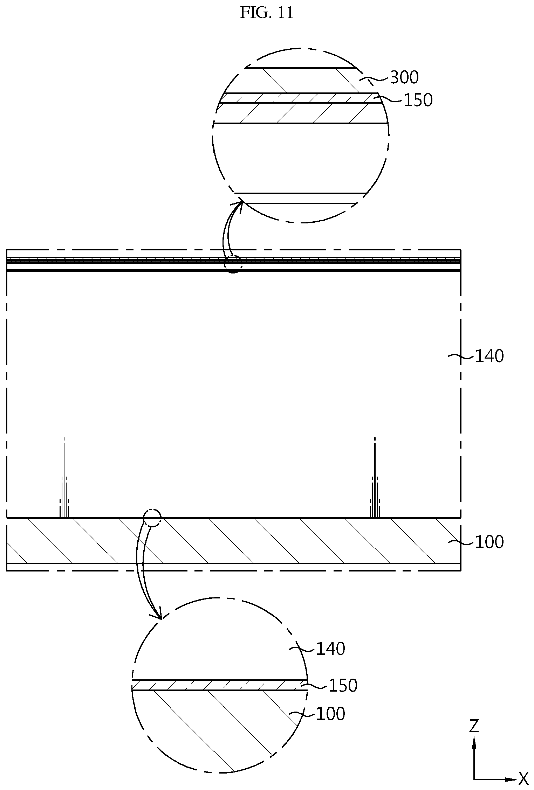

FIG. 11 is a cross-sectional view taken along line A-A' in FIG. 2.

Referring to FIG. 11, the battery pack 10 according to the present disclosure may include a sealing member 150. The sealing member 150 may be provided on at least one position between the barrier 140 and the pack cover 300 and between the barrier 140 and the pack housing 100. The sealing member 150 may be provided not only on the barrier 140 but also on at least one position between the additional barrier 141 and the pack cover 300 and between the additional barrier 141 and the pack housing 100. The sealing member 150 may be configured to cover at least a part of the coupling portion of the barrier 140, the pack cover 300, and/or the pack housing 100.

According to this configuration of the present disclosure, an effect of preventing gas from moving into the gap between the barrier 140 and the pack cover 300 and/or the pack housing 100 can be further improved.

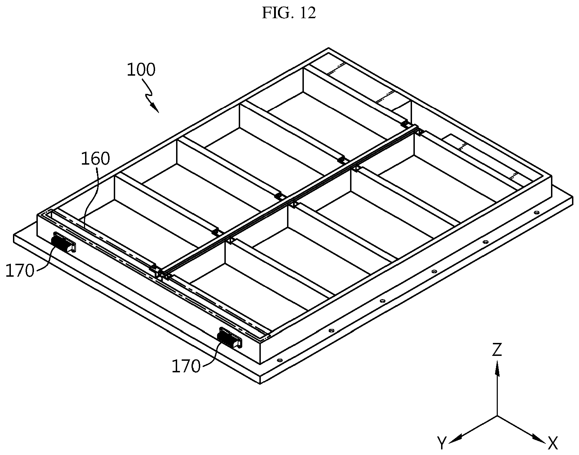

FIG. 12 is a diagram showing a gas collection space and a venting device included in the battery pack according to the present disclosure.

Referring to FIG. 12, the pack housing 100 may include a gas collection space 160. The gas collection space 160 may be formed in at least one of one side and the other side along the extension direction of the center venting channel 330. The gas collection space 160 may communicate with the center venting channel 330. For example, the gas collection space 160 may be provided at the end of the longitudinal direction (direction parallel to the Y-axis) of the pack housing 100 parallel to the extension direction of the center venting. However, the present disclosure is not limited to the shape, location, and number of gas collection spaces 160 shown in FIG. 12.

Referring to FIG. 12, the pack housing 100 may include a venting device 170. The venting device 170 may be configured to discharge the gas in the gas collection space 160 to the outside of the pack housing 100. The venting device 170 is formed to penetrate the pack housing 100 and may be in the form of a simple hole. **In** addition, the venting device 700 may be a specific device that not only has a completely open form, but also has a form not completely open, that is closed in a normal state and is opened according to a change in pressure or temperature.

According to this configuration of the present disclosure, when the internal pressure of the battery pack 10 increases since a large amount of gas is generated at once, the internal pressure of the battery pack 10 may be quickly reduced through the gas collection space 160. The gas may be discharged in the intended direction through the venting device 170, and even if a lot of venting gas is instantaneously generated, the gas may be discharged more rapidly and smoothly by increasing the processing capacity or number of the venting device 170.

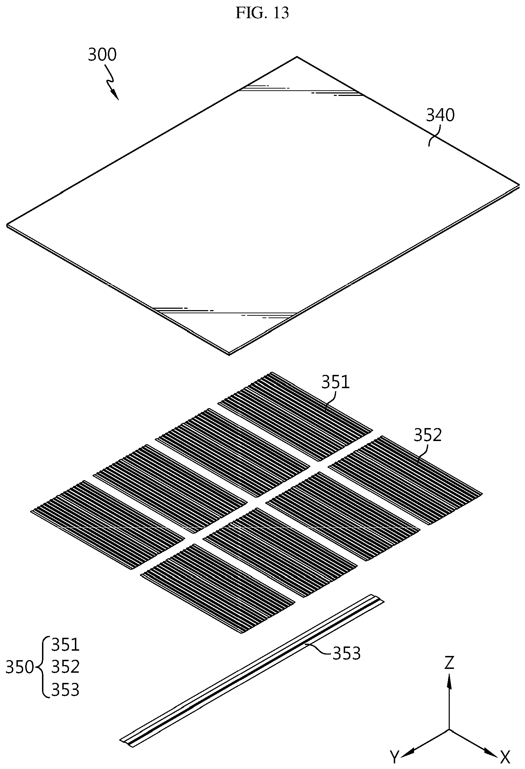

FIG. 13 is a diagram showing a cover plate and a channel plate included in the battery pack according to the present disclosure.

Referring to FIG. 13, the pack cover 300 may include a cover plate 340 and a channel plate 350. The cover plate 340 may be configured to cover the accommodation space of the pack housing 100. The channel plate 350 is coupled to the inner surface of the cover plate 340 and may include a first side venting channel 310, a second side venting channel 320, and a center venting channel 330.

The channel plate 350 may include a first channel plate 351, a second channel plate 352, and a third channel plate 353. The first channel plate 351 may be coupled to the inner surface of the cover plate 340 at a position corresponding to the first battery module 210. The first channel plate 351 may include a first side venting channel 310. The second channel plate 352 may be coupled to the inner surface of the cover plate 340 at a position corresponding to the second battery module 220. The second channel plate 352 may include a second side venting channel 320. The third channel plate 353 may be coupled at a position corresponding to the center space 130. The third channel plate 353 may include a center venting channel 330.

At least some of the cover plate 340, the first channel plate 351, the second channel plate 352, and the third channel plate 353 may be integrated with each other, and the present disclosure is not limited to the case where these plates are manufactured separately and combined.

According to this configuration of the present disclosure, when the cover plate 340 and the channel plate 350 do not have an integrated form and are provided as separate parts and combined, the pack cover 300 in a general form without a channel can be utilized as it is. When manufacturing the pack cover 300, production efficiency can be increased by separately manufacturing and combining plates. On the other hand, as described above, when the venting channel is formed on the inner surface of the pack cover 300, it is possible to minimize the decrease in the accommodation space in the pack housing 100 due to the formation of the channel.

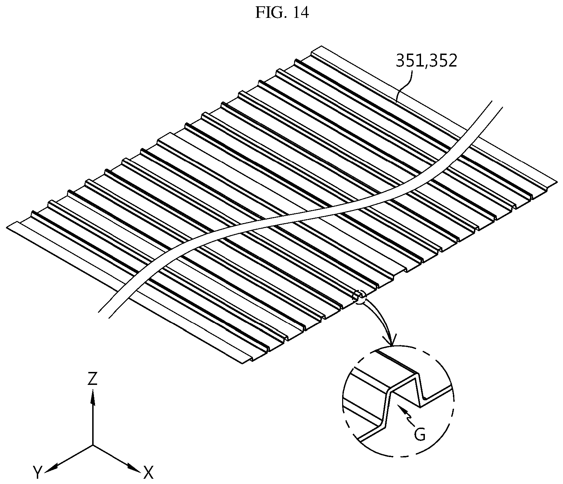

FIG. 14 is a diagram showing a groove provided in a pack cover included in the battery pack according to the present disclosure.

Referring to FIG. 14, the first side venting channel 310 and the second side venting channel 320 may have a groove form G formed on the inner surface of the pack cover 300. The first side venting channel 310 and the second side venting channel 320 may have a groove form G formed on the inner surface of the channel plate 350. In this case, the surface of the channel plate 350 opposite to the surface on which the groove G is formed may be coupled to the inner surface of the cover plate 340.

The first side venting channel 310 and the second side venting channel 320 may be provided in plurality along the longitudinal direction (Y-axis extension direction) of the battery pack 10. To this end, a plurality of grooves G may be provided.

According to this embodiment of the present disclosure, space efficiency can be increased in a secondary battery where energy density is important because a groove is formed without a separate member for forming a venting channel on the inner surface of the pack cover 300 or the channel plate 350. Production is easy because the present disclosure can be implemented more easily than combining a separate member for forming a venting channel with the pack cover 300 or the channel plate 350.

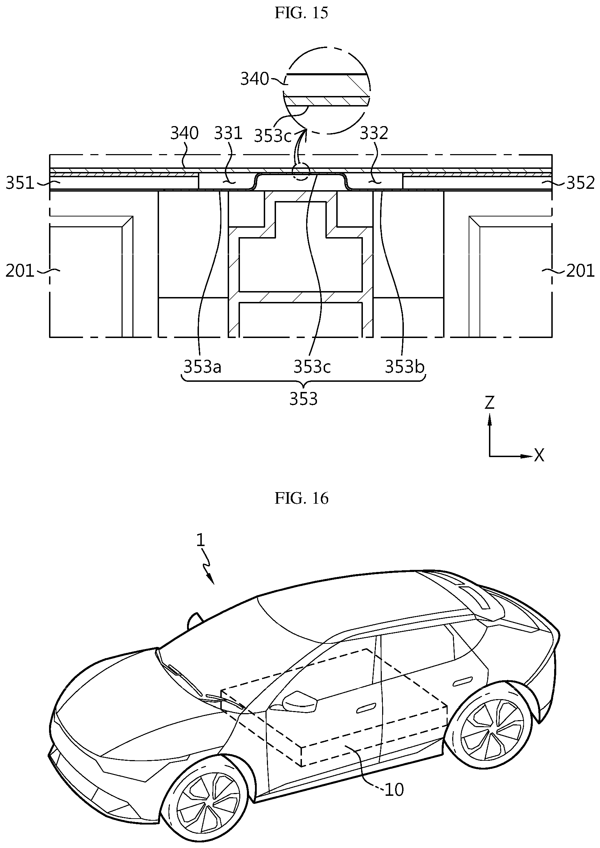

FIG. 15 is a cross-sectional view showing the battery pack according to the present disclosure to which the pack cover of FIG. 13 is applied, taken along line D-D'.

Referring to FIG. 15 together with FIG. 13, the center venting channel 330 may include a first center venting channel 331 and a second center venting channel 332. The first center venting channel 331 may communicate with the first side venting channel 310. The first center venting channel 331 may have a substantially rectangular shape when viewed on an X-Z plane. The first center venting channel 331 may be extended in the Y-axis direction. The first center venting channel 331 may have a fourth volume larger than the first volume. The second center venting channel 332 may communicate with the second side venting channel 320. The second center venting channel 332 may have a substantially rectangular shape when viewed on an X-Z plane. The second center venting channel 332 may be extended in the Y-axis direction. The second center venting channel 332 may have a fifth volume larger than the second volume.

Referring to FIG. 15 together with FIG. 13, the third channel plate 353 may include a first channel forming portion 353a, a second channel forming portion 353b, and a coupling portion 353c. The first channel forming portion 353a may form a first center venting channel 331 communicating with the first side venting channel 310. The second channel forming portion 353b may form a second center venting channel 332 communicating with the second side venting channel 320. The coupling portion 353c may connect the first channel forming portion 353a and the second channel forming portion 353b. The coupling portion 353c may be coupled to the inner surface of the cover plate 340. The third channel plate 353 may have a long extension shape along the Y-axis extension direction. The first channel forming portion 353a may be spaced apart from the inner surface of the cover plate 340 by a predetermined distance. Accordingly, the first center venting channel 331 may be formed in a space surrounded by the first channel forming portion 353a, the cover plate 340, and the coupling portion 353c. Similarly, the second channel forming portion 353b may be positioned apart from the inner surface of the cover plate 340 by a predetermined distance. Accordingly, the second center venting channel 332 may be formed in a space surrounded by the second channel forming portion 353b, the cover plate 340, and the coupling portion 353c. For smooth communication between the first side venting channel 310 and the first center venting channel 331, the first channel forming portion 353a can be located at a height (length extending along the direction parallel to the Z-axis) corresponding to the height of the battery cell 201 standing upright in the pack housing 100. Similarly, for smooth communication between the second side venting channel 320 and the second center venting channel 332, the second channel forming portion 353b can be located at a height corresponding to the height (length extending along the direction parallel to the Z-axis) of the battery cell 201 standing upright in the pack housing 100.

FIG. 16 is a diagram showing a vehicle according to the present disclosure.

Referring to FIG. 16, the battery pack 10 according to the present disclosure may be applied to a vehicle 1 such as an electric vehicle or a hybrid vehicle. That is, the vehicle 1 according to the present disclosure may include the battery pack 10 according to the present disclosure. In addition, the vehicle 1 according to the present disclosure may further include various other components included in a vehicle 1 in addition to the battery pack 10. For example, the vehicle 1 according to the present disclosure may further include a vehicle body, a motor, and a control device such as an electronic control unit (ECU), in addition to the battery pack 10 according to the present disclosure.

### [Explanation of reference signs]

1 : vehicle
10 : battery pack
100 : pack housing
110 : first accommodation space
120 : second accommodation space
130 : center space
140 : barrier
141 : additional barrier
150 : sealing member
160 : gas collection space
170 : venting device
200 : battery module
201 : battery cell
202 : bus bar frame assembly
203 : module case
203a : venting hole
210 : first battery module
220 : second battery module
300 : pack cover
310 : first side venting channel
320 : second side venting channel
330 : center venting channel
331 : first center venting channel
332 : second center venting channel
340 : cover plate
350 : channel plate
351 : first channel plate
352 : second channel plate
353 : third channel plate
353a : first channel forming portion, 353b : second channel forming portion, 353c : coupling portion
groove : G

## Claims

1. A battery pack (10) comprising:
a pack housing (100) having a first accommodation space (110), a second accommodation space (120) spaced apart from the first accommodation space (110), and a center space (130) formed between the first accommodation space (110) and the second accommodation space (120);
at least one first battery module (210) disposed within the first accommodation space (110);
at least one second battery module (220) disposed within the second accommodation space (120);
and a pack cover (300) configured to include a first side venting channel (310) having a first volume and configured to guide the gas generated in the first battery module (210) to the center space (130) at a position corresponding to the first battery module (210), a second side venting channel (320) having a second volume and configured to guide the gas generated in the second battery module (220) to the center space (130) at a position corresponding to the second battery module (220), and a center venting channel (330) having a third volume equal to or greater than the first volume and the second volume and configured to guide the gas collected in the center space (130) to the outside of the pack housing (100) at a position corresponding to the center space (130).

2. The battery pack (10) according to claim 1, wherein a region of the pack cover (300) corresponding to the center venting channel (330) is formed at a higher position than a region corresponding to the first side venting channel (310) and the second side venting channel (320).

3. The battery pack (10) according to claim 1, wherein the battery pack (10) includes a barrier (140) disposed at a corresponding position between the first battery modules (210) adjacent to each other and a corresponding position between the second battery modules (220) adjacent to each other, respectively.

4. The battery pack (10) according to claim 3, wherein the barrier (140) is configured to block the movement of gas between the accommodation spaces of the first battery modules (210) adjacent to each other and the movement of gas between the accommodation spaces of the second battery modules (220) adjacent to each other.

5. The battery pack (10) according to claim 4, wherein the battery pack (10) includes a sealing member (150) on at least one position between the barrier (140) and the pack cover (300) and between the barrier (140) and the pack housing (100).

6. The battery pack (10) according to claim 1, wherein the pack cover (300) includes:
a cover plate (340) configured to cover the accommodation space of the pack housing (100); and
a channel plate (350) coupled to an inner surface of the cover plate (340) and having the first side venting channel (310), the second side venting channel (320), and the center venting channel (330).

7. The battery pack (10) according to claim 6, wherein the channel plate (350) includes:
a first channel plate (351) coupled to the inner surface of the cover plate (340) at a position corresponding to the first battery module (210) and having the first side venting channel (310);
a second channel plate (352) coupled to the inner surface of the cover plate (340) at a position corresponding to the second battery module (220) and having the second side venting channel (320); and
a third channel plate (353) coupled to the inner surface of the cover plate (340) at a position corresponding to the center space (130) and having the center venting channel (330).

8. The battery pack (10) according to claim 1, wherein the pack housing (100) includes a gas collection space (160) formed in at least one of one side and the other side along an extension direction of the center venting channel (330).

9. The battery pack (10) according to claim 8, wherein the pack housing (100) includes a venting device (170) configured to allow gas in the gas collection space (160) to be discharged to the outside of the pack housing (100).

10. The battery pack (10) according to claim 1, wherein the first side venting channel (310) and the second side venting channel (320) have a groove form formed on an inner surface of the pack cover (300).

11. The battery pack (10) according to claim 7, wherein the first side venting channel (310) and the second side venting channel (320) have a groove form formed on one surface of the first channel plate (351) and the second channel plate (352), respectively, and
wherein a surface of the first channel plate (351) and the second channel plate (352) opposite to a surface on which the groove is formed is coupled to the inner surface of the cover plate (300).

12. The battery pack (10) according to claim 1, wherein the first side venting channel (310) and the second side venting channel (320) are provided in plurality along a longitudinal direction of the battery pack (10), respectively.

13. The battery pack (10) according to claim 7, wherein the center venting channel (330) includes:
a first center venting channel (331) communicating with the first side venting channel (310) and configured to have a fourth volume larger than the first volume; and
a second center venting channel (332) communicating with the second side venting channel (320) and configured to have a fifth volume greater than the second volume.

14. The battery pack (10) according to claim 13, wherein the third channel plate (353) includes:
a first channel forming portion (353a) forming a first center venting channel (331) communicating with the first side venting channel (310);
a second channel forming portion (353b) forming a second center venting channel (332) communicating with the second side venting channel (320); and
a coupling portion (353c) that connects the first channel forming portion (353a) and the second channel forming portion (353b) and is coupled to the inner surface of the cover plate (300).

15. A vehicle (1), comprising the battery pack (10) according to any one of claims 1 to 14.

## Patentansprüche

1. Batteriepack (10), umfassend:
ein Packgehäuse (100), welches einen ersten Aufnahmeraum (110), einen von dem ersten Aufnahmeraum (110) beabstandeten zweiten Aufnahmeraum (120) und einen mittleren Raum (130) aufweist, welcher zwischen dem ersten Aufnahmeraum (110) und dem zweiten Aufnahmeraum (120) gebildet ist;
wenigstens ein erstes Batteriemodul (210), welches innerhalb des ersten Aufnahmeraums (110) angeordnet ist;
wenigstens ein zweites Batteriemodul (220), welches innerhalb des zweiten Aufnahmeraums (120) angeordnet ist; und
eine Packabdeckung (300), welche derart eingerichtet ist, dass sie an einer dem ersten Batteriemodul (210) entsprechenden Position einen ersten seitlichen Entlüftungskanal (310), welcher ein erstes Volumen aufweist und welcher dazu eingerichtet ist, das in dem ersten Batteriemodul (210) erzeugte Gas zu dem mittleren Raum (130) zu leiten, an einer dem zweiten Batteriemodul (220) entsprechenden Position einen zweiten seitlichen Entlüftungskanal (320), welcher ein zweites Volumen aufweist und welcher dazu eingerichtet ist, das in dem zweiten Batteriemodul (220) erzeugte Gas zu dem mittleren Raum (130) zu leiten, und an einer dem mittleren Raum (130) entsprechenden Position einen mittleren Entlüftungskanal (330) umfasst, welcher ein drittes Volumen aufweist, welches gleich wie oder größer als das erste Volumen und das zweite Volumen ist, und welcher dazu eingerichtet ist, das in dem mittleren Raum (130) gesammelte Gas zu dem Äußeren des Packgehäuses (100) zu leiten.

2. Batteriepack (10) nach Anspruch 1, wobei ein dem mittleren Entlüftungskanal (330) entsprechender Bereich der Packabdeckung (300) an einer höheren Position gebildet ist als ein dem ersten seitlichen Entlüftungskanal (310) und dem zweiten seitlichen Entlüftungskanal (320) entsprechender Bereich.

3. Batteriepack (10) nach Anspruch 1, wobei der Batteriepack (10) eine Barriere (140) umfasst, welche an einer entsprechenden Position zwischen den einander benachbarten ersten Batteriemodulen (210) bzw. einer entsprechenden Position zwischen den einander benachbarten zweiten Batteriemodulen (220) angeordnet ist.

4. Batteriepack (10) nach Anspruch 3, wobei die Barriere (140) dazu eingerichtet ist, die Bewegung von Gas zwischen den Aufnahmeräumen der einander benachbarten ersten Batteriemodule (210) und die Bewegung von Gas zwischen den Aufnahmeräumen der einander benachbarten zweiten Batteriemodule (220) zu blockieren.

5. Batteriepack (10) nach Anspruch 4, wobei der Batteriepack (10) an wenigstens einer Position zwischen der Barriere (140) und der Packabdeckung (300) und zwischen der Barriere (140) und dem Packgehäuse (100) ein Dichtelement (150) umfasst.

6. Batteriepack (10) nach Anspruch 1, wobei die Packabdeckung (300) umfasst:
eine Abdeckplatte (340), welche dazu eingerichtet ist, den Aufnahmeraum des Packgehäuses (100) abzudecken; und
eine Kanalplatte (350), welche mit einer inneren Fläche der Abdeckplatte (340) gekoppelt ist und den ersten seitlichen Entlüftungskanal (310), den zweiten seitlichen Entlüftungskanal (320) und den mittleren Entlüftungskanal (330) aufweist.

7. Batteriepack (10) nach Anspruch 6, wobei die Kanalplatte (350) umfasst:
eine erste Kanalplatte (351), welche an einer dem ersten Batteriemodul (210) entsprechenden Position mit der inneren Fläche der Abdeckplatte (340) gekoppelt ist und den ersten seitlichen Entlüftungskanal (310) aufweist;
eine zweite Kanalplatte (352), welche an einer dem zweiten Batteriemodul (220) entsprechenden Position mit der inneren Fläche der Abdeckplatte (340) gekoppelt ist und den zweiten seitlichen Entlüftungskanal (320) aufweist; und
eine dritte Kanalplatte (353), welche an einer dem mittleren Raum (130) entsprechenden Position mit der inneren Fläche der Abdeckplatte (340) gekoppelt ist und den mittleren Entlüftungskanal (330) aufweist.

8. Batteriepack (10) nach Anspruch 1, wobei das Packgehäuse (100) einen Gassammelraum (160) umfasst, welcher entlang einer Erstreckungsrichtung des mittleren Entlüftungskanals (330) in wenigstens einer aus der einen Seite und der anderen Seite gebildet ist.

9. Batteriepack (10) nach Anspruch 8, wobei das Packgehäuse (100) eine Entlüftungsvorrichtung (170) umfasst, welche dazu eingerichtet ist, zu ermöglichen, dass Gas in dem Gassammelraum (160) zu dem Äußeren des Packgehäuses (100) abgeführt wird.

10. Batteriepack (10) nach Anspruch 1, wobei der erste seitliche Entlüftungskanal (310) und der zweite seitliche Entlüftungskanal (320) eine Nutform aufweisen, welche an einer inneren Fläche der Packabdeckung (300) gebildet ist.

11. Batteriepack (10) nach Anspruch 7, wobei der erste seitliche Entlüftungskanal (310) und der zweite seitliche Entlüftungskanal (320) eine Nutform aufweisen, welche an einer Fläche der ersten Kanalplatte (351) bzw. der zweiten Kanalplatte (352) gebildet ist, und
wobei eine Fläche der ersten Kanalplatte (351) und der zweiten Kanalplatte (352), welche einer Fläche entgegengesetzt ist, an welcher die Nut gebildet ist, mit der inneren Fläche der Abdeckplatte (300) gekoppelt ist.

12. Batteriepack (10) nach Anspruch 1, wobei der erste seitliche Entlüftungskanal (310) und der zweite seitliche Entlüftungskanal (320) entlang einer longitudinalen Richtung des Batteriepacks (10) jeweils in einer Mehrzahl bereitgestellt sind.

13. Batteriepack (10) nach Anspruch 7, wobei der mittlere Entlüftungskanal (330) umfasst:
einen ersten mittleren Entlüftungskanal (331), welcher mit dem ersten seitlichen Entlüftungskanal (310) in Verbindung steht und derart eingerichtet ist, dass er ein viertes Volumen aufweist, welches größer ist als das erste Volumen; und
einen zweiten mittleren Entlüftungskanal (332), welcher mit dem zweiten seitlichen Entlüftungskanal (320) in Verbindung steht und derart eingerichtet ist, dass er ein fünftes Volumen aufweist, welches größer ist als das zweite Volumen.

14. Batteriepack (10) nach Anspruch 13, wobei die dritte Kanalplatte (353) umfasst:
einen ersten Kanalbildungsabschnitt (353a), welcher einen ersten mittleren Entlüftungskanal (331) bildet, der mit dem ersten seitlichen Entlüftungskanal (310) in Verbindung steht;
einen zweiten Kanalbildungsabschnitt (353b), welcher einen zweiten mittleren Entlüftungskanal (332) bildet, der mit dem zweiten seitlichen Entlüftungskanal (320) in Verbindung steht; und
einen Kopplungsabschnitt (353c), welcher den ersten Kanalbildungsabschnitt (353a) und den zweiten Kanalbildungsabschnitt (353b) verbindet und welcher mit der inneren Fläche der Abdeckplatte (300) gekoppelt ist.

15. Fahrzeug (1), umfassend den Batteriepack (10) nach einem der Ansprüche 1 bis 14.

## Revendications

1. Bloc-batterie (10) comprenant :
un logement de bloc (100) ayant un premier espace de réception (110), un deuxième espace de réception (120) espacé du premier espace de réception (110), et un espace central (130) formé entre le premier espace de réception (110) et le deuxième espace de réception (120) ;
au moins un premier module de batterie (210) disposé au sein du premier espace de réception (110) ;
au moins un deuxième module de batterie (220) disposé au sein du deuxième espace de réception (120) ;
et un couvercle de bloc (300) configuré pour comporter un premier canal d'évent latéral (310) ayant un premier volume et configuré pour guider le gaz généré dans les premiers modules de batterie (210) vers l'espace central (130) à une position correspondant au premier module de batterie (210), un deuxième canal d'évent latéral (320) ayant un deuxième volume et configuré pour guider le gaz généré dans le deuxième module de batterie (220) vers l'espace central (130) à une position correspondant au deuxième module de batterie (220), et un canal d'évent central (330) ayant un troisième volume égal ou supérieur au premier volume et au deuxième volume et configuré pour guider le gaz collecté dans l'espace central (130) vers l'extérieur du logement de bloc (100) à une position correspondant à l'espace central (130).

2. Bloc-batterie (10) selon la revendication 1, dans lequel une région du couvercle de bloc (300) correspondant au canal d'évent central (330) est formée à une position plus haute qu'une région correspondant au premier canal d'évent latéral (310) et au deuxième canal d'évent latéral (320).

3. Bloc-batterie (10) selon la revendication 1, dans lequel le bloc-batterie (10) comporte une barrière (140) disposée à une position correspondante entre les premiers modules de batterie (210) adjacents les uns aux autres et à une position correspondante entre les deuxièmes modules de batterie (220) adjacents les uns aux autres, respectivement.

4. Bloc-batterie (10) selon la revendication 3, dans lequel la barrière (140) est configurée pour bloquer le mouvement de gaz entre les espaces de réception des premiers modules de batterie (210) adjacents les uns aux autres et le mouvement de gaz entre les espaces de réception des deuxièmes modules de batterie (220) adjacents les uns aux autres.

5. Bloc-batterie (10) selon la revendication 4, dans lequel le bloc-batterie (10) comporte un organe d'étanchéité (150) sur au moins une position entre la barrière (140) et le couvercle de bloc (300) et entre la barrière (140) et le logement de bloc (100).

6. Bloc-batterie (10) selon la revendication 1, dans lequel le couvercle de bloc (300) comporte :
une plaque de couvercle (340) configurée pour recouvrir l'espace de réception du logement de bloc (100) ; et
une plaque de canal (350) couplée à une surface intérieure de la plaque de couvercle (340) et comportant le premier canal d'évent latéral (310), le deuxième canal d'évent latéral (320) et le canal d'évent central (330).

7. Bloc-batterie (10) selon la revendication 6, dans lequel la plaque de canal (350) comporte :
une première plaque de canal (351) couplée à la surface intérieure de la plaque de couvercle (340) à une position correspondant au premier module de batterie (210) et ayant le premier canal d'évent latéral (310) ;
une deuxième plaque de canal (352) couplée à la surface intérieure de la plaque de couvercle (340) à une position correspondant aux deuxièmes modules de batterie (220) et ayant le deuxième canal d'évent latéral (320) ; et
une troisième plaque de canal (353) couplée à la surface intérieure de la plaque de couvercle (340) à une position correspondant à l'espace central (130) et ayant le canal d'évent central (330).

8. Bloc-batterie (10) selon la revendication 1, dans lequel le logement de bloc (100) comporte un espace de collecte de gaz (160) formé dans au moins un parmi un côté et l'autre côté suivant une direction d'extension du canal d'évent central (330).

9. Bloc-batterie (10) selon la revendication 8, dans lequel le logement de bloc (100) comporte un dispositif d'évent (170) configuré pour permettre à un gaz dans l'espace de collecte de gaz (160) d'être évacué vers l'extérieur du logement de bloc (100).

10. Bloc-batterie (10) selon la revendication 1, dans lequel le premier canal d'évent latéral (310) et le deuxième canal d'évent latéral (320) présentent une forme de rainure formée sur une surface intérieure du couvercle de bloc (300).

11. Bloc-batterie (10) selon la revendication 7, dans lequel le premier canal d'évent latéral (310) et le deuxième canal d'évent latéral (320) présentent une forme de rainure formée sur une surface de la première plaque de canal (351) et de la deuxième plaque de canal (352), respectivement, et
dans lequel une surface de la première plaque de canal (351) et de la deuxième plaque de canal (352) opposée à une surface sur laquelle la rainure est formée est couplée à la surface intérieure de la plaque de couvercle (300).

12. Bloc-batterie (10) selon la revendication 1, dans lequel le premier canal d'évent latéral (310) et le deuxième canal d'évent latéral (320) sont fournis en nombres suivant une direction longitudinale du bloc-batterie (10), respectivement.

13. Bloc-batterie (10) selon la revendication 7, dans lequel le canal d'évent central (330) comporte :
un premier canal d'évent central (331) communiquant avec le premier canal d'évent latéral (310) et configuré pour présenter un quatrième volume plus grand que le premier volume ; et
un deuxième canal d'évent central (332) communiquant avec le deuxième canal d'évent latéral (320) et configuré pour présenter un cinquième volume plus grand que le deuxième volume.

14. Bloc-batterie (10) selon la revendication 13, dans lequel la troisième plaque de canal (353) comporte :
une première portion formant canal (353a) formant un premier canal d'évent central (331) communiquant avec le premier canal d'évent latéral (310) ;
une deuxième portion formant canal (353b) formant un deuxième canal d'évent central (332) communiquant avec le deuxième canal d'évent latéral (320) ; et
une portion de couplage (353c) qui relie la première portion formant canal (353a) et la deuxième portion formant canal (353b) et est couplée à la surface intérieure de la plaque de couvercle (300).

15. Véhicule (1), comprenant le bloc-batterie (10) selon l'une quelconque des revendications 1 à 14.
